(19) Europäisches Patentamt
European Patent Office
Office européen des brevets

(11) **EP 4 222 043 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **21773332.8**

(22) Anmeldetag: **02.09.2021**

(51) Internationale Patentklassifikation (IPC):
**B62D 5/04** *(2006.01)* **B62D 6/00** *(2006.01)*

(52) Gemeinsame Patentklassifikation (CPC):
**B62D 6/008; B62D 5/0463; B62D 6/003;**
B62D 5/0481

(86) Internationale Anmeldenummer:
**PCT/EP2021/074295**

(87) Internationale Veröffentlichungsnummer:
**WO 2022/069146 (07.04.2022 Gazette 2022/14)**

(54) **ERMITTLUNG EINER ZAHNSTANGENKRAFT FÜR EIN FAHRZEUGLENKSYSTEM**

DETERMINING A RACK FORCE FOR A VEHICLE STEERING SYSTEM

DÉTERMINATION D'UNE FORCE DE CRÉMAILLÈRE POUR UN SYSTÈME DE DIRECTION DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2020 DE 102020212259**

(43) Veröffentlichungstag der Anmeldung:
**09.08.2023 Patentblatt 2023/32**

(73) Patentinhaber: **VOLKSWAGEN AKTIENGESELLSCHAFT**
**38440 Wolfsburg (DE)**

(72) Erfinder: **SCHÄFER, Johannes Maria**
**39615 Werben OT Berge (DE)**

(56) Entgegenhaltungen:
**EP-A1- 3 712 036 DE-A1- 102008 021 848**
**DE-A1- 102017 222 776**

**Beschreibung**

Die Erfindung betrifft ein Steuergerät und ein Verfahren zum Ermitteln einer Zahnstangenkraftgröße in einem Lenksystem mit aktorisch verlagerbarer Zahnstange. Das Lenksystem kann Bestandteil eines Kraftfahrzeugs sein, insbesondere eines Personenkraftwagens oder eines Lastkraftwagens.

In Fahrzeuglenksystemen kommen oftmals aktorisch verlagerte (insbesondere linear verschobene) Zahnstangen zum Einsatz. Für das Betreiben des Lenksystems ist es dabei in verschiedenstem Zusammenhang von Interesse, eine an der Zahnstange angreifende Zahnstangenkraft möglichst genau ermitteln zu können. Beispielsweise entspricht diese Kraft einer vom Fahrer theoretisch wahrnehmbaren Kraft, falls dieser eine Lenkhandhabe mit mechanischer Kopplung zur Zahnstange aufweist (sogenannte elektromechanische Lenkung).

Im Fall von Steer-by-Wire-Lenksystemen ohne mechanische Kopplung zwischen Lenkhandhabe und Lenkgetriebe bzw. Zahnstange wird anhand einer ermittelten Zahnstangenkraft typischerweise ein Aktor gesteuert. Dieser weist eine mechanische Kopplung zur Lenkhandhabe auf und erzeugt dort vom Fahrer haptisch wahrnehmbare Rückkopplungsmomente. Ein solcher Aktor wird auch als Reaktionskraftaktor bezeichnet.

Die Erfindung ist nicht auf eine bestimmte Art von Lenksystem beschränkt (insbesondere nicht auf eine von elektromechanischer Lenkung oder Steer-by-Wire-Lenkung), sondern kann z.B. bei beiden Lenkungstypen gleichermaßen eingesetzt werden. Sie ist auch nicht auf eine konkrete Verwendung einer ermittelten Zahnstangenkraft beschränkt, beispielsweise ob darauf basierend ein Reaktionskraftaktor oder ein anderweitiger Aktor angesteuert wird (z.B. zum Ausgleichen von Reibungseffekten bei elektromechanischen Lenkungen).

Aus der DE 10 2008 021 848 A1 ist ein Lenksystem mit einer Eingabeeinrichtung zur Eingabe eines Sollwerts bekannt, welcher der von dem Fahrer gewünschten Kraft entspricht, mit der die Zahnstange eine Kraft ausübt. Weiter ist eine Steuervorrichtung vorgesehen, die mittels eines Motors Kraft auf die Zahnstange aufbringt, wobei das Lenksystem mit einer Kompensationsschaltung versehen ist, welche den aktuellen Reibungswert des Systems bestimmt und ein Kompensationssignal berechnet, welches dem Sollwert hinzugefügt wird, damit unter Berücksichtigung der berechneten aktuellen Reibung an der Zahnstange die gewünschte Kraft ausgeübt wird. DE 10 2008 021848 A1 offenbart insbesondere ein Verfahren zum Ermitteln einer Zahnstangenkraftgröße für ein Lenksystem mit aktorisch verlagerbarer Zahnstange, aufweisend:

-    Erhalten eines Soll-Aktormoments zum Umsetzen einer Lenkvorgabe;
-    Erhalten eines Ist-Aktormoments, das zum Umsetzen der Lenkvorgabe aufgebracht wird.

Aus der DE 10 2017 222 776 A1 ist ein Verfahren zum Schätzen einer Zahnstangenkraft mittels eines Satzes von Zahnstangenkraftmodellen bekannt, wobei die Bestimmung der Zahnstangenkraft mittels eines Kalman-Filters erfolgen kann.

Aus der EP 3 712 036 A1 ist ein weiteres Lenksystem bekannt.

Prinzipiell kann die Zahnstangenkraft sensorisch ermittelt werden. Dies ist aber mit hohen Kosten verbunden. Etabliert ist deshalb eine Zahnstangenkraftschätzung anhand anderer insbesondere messtechnisch per Modellbildung, und/oder regelungstechnisch erfasster Größen, beispielsweise unter Zuhilfenahme eines mathematischen Modells des Lenksystems. So offenbart die DE 10 2018 215 555 A1 das Ermitteln eines Reibungsbetriebs, bei dem im Lenksystem auftretende Reibungskräfte aktorische Verlagerungskräfte der Zahnstange übersteigen und eine Zahnstangenbewegung zunächst ausbleibt. In diesem Reibungsbetrieb soll die Zahnstangenkraft unter Berücksichtigung einer Stellkraft (also Verlagerungskraft) eines an der Zahnstange angreifenden Aktors bestimmt werden.

Diese Lösung ist dahingehend vorteilhaft, als dass Reibungseinflüsse im Lenksystem bei der Zahnstangenkraftermittlung gesondert berücksichtigt werden. Dies ist nicht bei sämtlichen Lösungen des Standes der Technik der Fall, die aufgrund der Vernachlässigung und/oder unpräzisen Abbildungen von Reibungseinflüssen die Zahnstangenkraft nur unpräzise ermitteln können.

Trotz der somit bereits erzielten Verbesserung zur Berücksichtigung von Reibungseinflüssen bei der Zahnstangenkraftermittlung besteht nach wie vor ein Bedarf dafür, die Zahnstangenkraft möglichst präzise zu schätzen.

Die Erfindung stellt sich demnach die Aufgabe, eine Alternative zum Ermitteln der Zahnstangenkraft bereitzustellen und insbesondere die erzielbare Genauigkeit zu steigern.

Diese Aufgabe wird durch die Gegenstände der unabhängigen Ansprüche gelöst.

Die Erfindung sieht allgemein vor, die zum Umsetzen einer Lenkvorgabe (z.B. infolge der manuellen Betätigung der Lenkhandhabe durch einen Fahrer und/oder wie von einem Fahrerassistenzsystem angefordert) Soll- und Ist-Betriebsgrößen eines zur Zahnstangenverlagerung verwendeten Aktors heranzuziehen. Bei diesen Betriebsgrößen kann es sich insbesondere um aktorisch erzeugte Momente handeln (im Folgenden Aktormoment, alternativ auch als Motormoment bezeichenbar). Diese können im Rahmen einer durchgeführten Regelung zum Umsetzen der Lenkvorgabe ermittelt werden und/oder auftreten.

Beispielsweise kann das Aktormoment eingeregelt werden, wobei von einem benötigten Soll-Aktormoment zum Umsetzen einer Lenkvorgabe und insbesondere einer vorgegebenen Lenkpositionsgröße (insbesondere einem Lenkwinkel) ausgegangen werden kann. Wie nachstehend noch erläutert, kann aber insbesondere eine übergeordnete Positionsregelung vorliegen, innerhalb derer nach Art einer Kaskadenregelung auch das Aktormoment zum Umsetzen einer Lenkvorgabe eingeregelt wird. Beispielsweise kann eine Positionsregelung einen Führungsregelkreis bilden und kann wenigstens ein Folgeregelkreis zum Einregeln eines Aktormoments vorgesehen sein, wobei das Soll-Aktormoment von dem Führungsregelkreis oder wenigstens einem weiteren zwischen Führungsregelkreis und Folgeregelkreis geschalteten Regelkreis ausgegeben wird.

Es hat sich gezeigt, dass insbesondere Abweichungen zwischen dem Soll- und Ist-Aktormoment präzise auf Reibungseinflüsse innerhalb des Lenksystems schließen lassen. Anders ausgedrückt können anhand des Soll-Motormoments und Ist-Motormoments bisher nur schwer zu modellierende Reibungsanteile innerhalb des Lenksystems zuverlässig geschätzt werden und kann dann, insbesondere in Kenntnis einer aktorisch auf die Zahnstange aufgebrachten Kraft, die dort tatsächlich wirksame Zahnstangenkraft unter Einfluss von Reibung bestimmt werden.

Es versteht sich, dass das Verfahren allgemein fahrerautonom ausführbar ist und insbesondere computergestützt durchgeführt werden kann. Dies kann mit einem Steuergerät der hierin offenbarten Art erfolgen.

Insbesondere wird ein Verfahren zum Ermitteln einer Zahnstangenkraftgröße für ein Lenksystem (insbesondere eines Kraftfahrzeugs und ferner insbesondere eines Personenkraftwagens oder Lastkraftwagens) mit aktorisch verlagerbarer Zahnstange vorgeschlagen. Das Verfahren weist auf:

- Erhalten (und insbesondere Ermitteln) eines Soll-Aktormoments zum Umsetzen einer Lenkvorgabe oder, mit anderen Worten, das zum Umsetzen einer erhaltenen Lenkvorgabe erforderlich ist;
- Erhalten eines Ist-Aktormoments, das zum (insbesondere tatsächlichen) Umsetzen der Lenkvorgabe aufgebracht wird, d.h. zum (tatsächlichen) Umsetzen der Lenkvorgabe benötigt und/oder erzeugt wird;
- Ermitteln einer Zahnstangenkraftgröße auf Basis des Soll-Motormoments und des Ist-Motormoments.

Die Aktormomente können durch einen Aktor aufgebracht werden, der mechanisch mit der Zahnstange gekoppelt ist. Insbesondere kann es sich hierbei um einen Elektromotor handeln. Dieser kann über wenigstens eine Übersetzungsstufe und/oder einen Ritzel mechanisch mit der Zahnstange gekoppelt sein. Ein von dem Aktor aufgebrachtes Moment kann hierdurch in eine lineare Verlagerung der Zahnstange umsetzbar sein. Die Zahnstange kann mit den Fahrzeugrädern einer Achse mechanisch gekoppelt sein. Hierdurch kann in an sich bekannter Weise eine lineare Zahnstangenbewegung in Veränderungen des Lenkwinkels der Räder umgesetzt werden. Insbesondere können die Fahrzeugräder daraufhin um eine im Wesentlichen vertikal verlaufende Achse rotiert werden.

Die Lenkvorgabe kann beispielsweise durch Erfassen eines Winkels an einer Lenkhandhabe erzeugt werden bzw. einem solchen Winkel entsprechen. Das Soll-Aktormoment kann zumindest unter mittelbarer Berücksichtigung der Lenkvorgabe und insbesondere eines geschilderten Lenkhandhabewinkels bestimmt werden. Die zumindest mittelbare Abhängigkeit kann z.B. aus der hierin offenbarten Kaskadenregelung und/oder einer übergeordneten Positionsregelung folgen.

Das Ist-Aktormoment kann sensorisch erfasst werden und/oder durch Auswerten von Stromgrößen des Aktors. Beispielsweise kann das Ist-Aktormoment aus Phasenströmen des Aktors bestimmt werden. Die Phasenströme können im Rahmen einer Leistungsregelung des Aktors ermittelt werden oder als Betriebsgrößen allgemein bekannt sein.

Auch kann ein per Kalibrierfaktor korrigiertes Ist-Moment herangezogen werden. So ist es bekannt, dass der Zahnstangen-Aktor bezüglich seiner Momentenerzeugung kalibrierbar ist. Zusätzlich oder alternativ können Kalibrierfaktoren aus z.B. Prüfstandsmessungen des Lenksystems erhalten werden. Das Ist-Moment kann zusätzlich oder alternativ zu z.B. Phasenstrom-Messungen also auch rechnerisch per Kalibrierfaktoren bestimmt werden.

Wie hierin noch geschildert, kann die Zahnstangenkraftgröße auch dadurch auf Basis des Soll-Motormoments und des Ist-Motormoments ermittelt werden, dass eine Soll-Ist-Differenz dieser Motormomente gebildet wird und/oder eine Regeldifferenz einer entsprechenden Momentenregelung erhalten wird. In Abhängigkeit von und somit auf Basis einer solchen Differenz kann die Zahnstangenkraftgröße ermittelt werden, wodurch das Soll-Motormoment und Ist-Motormoment berücksichtigt werden bzw. in diese Größenermittlung einfließen.

Eine Weiterbildung sieht vor, dass auf Basis der Zahnstangenkraftgröße ein Rückkopplungsmoment an einer Lenkhandhabe aktorisch erzeugt wird. Anders ausgedrückt kann ein mit der Lenkhandhabe gekoppelter Aktor zum Erzeugen eines Rückkopplungsmoments auf Basis der Zahnstangenkraftgröße angesteuert werden. Beispielsweise kann die Zahnstangenkraftgröße eine Eingangsgröße einer Aktorsteuerung darstellen und/oder kann darauf basierend ein Wert des Rückkopplungsmoments ermittelt werden, das an der Lenkhandhabe bereitzustellen oder, mit anderen Worten, aktorisch zu erzeugen ist. Diese Variante betrifft vorstehend geschilderte Steer-by-Wire-Lenkungen. Es hat sich gezeigt, dass durch das Ermitteln der Zahnstangenkraftgröße auf Basis des Soll-/Ist-Aktormoments und deren zumindest mittelbare Berücksichtigung beim Erzeugen eines Rückkopplungsmoments ein besonders präzises Lenkgefühl erzielen lässt.

Wie erwähnt, kann die Zahnstangenkraftgröße anhand einer Differenz des Soll-Aktormoments und des Ist-Aktormoments ermittelt werden (und dadurch entsprechend auf Basis des Soll- und Ist-Aktormoments bestimmt werden). Insbesondere kann diese Differenz als eine Größe verwendet werden, die eine Reibungskraft repräsentiert. Allgemein kann anhand des Soll-/Ist-Aktormoments und insbesondere deren Differenz ein an der Zahnstange wirkender (Reib-) Kraftanteil bestimmt werden. Hierfür kann die Differenz mittels eines Übersetzungsverhältnisses und/oder Ritzelradius der den Aktor und Zahnstange koppelnden Getriebestufe verrechnet bzw. in einen Kraftwert umgerechnet werden.

Dies ist insbesondere dann vorteilhaft, wenn die Zahnstangenkraftgröße auf Basis eines Kräftegleichgewichts und/oder einer Kräftebilanz ermittelt wird, in der auch eine entsprechende Reibungskraft enthalten ist. Ein solches Gleichgewicht bzw. eine solche Bilanz kann z.B. aus einem sogenannten Lenkungsfreischnitt erhalten werden. Es kann von jeglichem hierin erwähnten Modell oder Filter umfasst, abgebildet und/oder verwendet werden. Dann kann diese Reibungskraft durch die geschilderte Differenz zumindest anteilig repräsentiert bzw. gebildet werden. Zusätzlich in die Kräftebilanz einfließen kann eine vom Aktor auf die Zahnstange übertragene Verlagerungskraft, die z.B. aus einem bekannten Übersetzungsverhältnis zwischen Aktor und Zahnstange sowie einem Ist-Aktormoment bestimmt werden kann. Auch Trägheitskräfte der Zahnstange können berücksichtigt werden. Die tatsächlich wirksame Zahnstangenkraftgröße kann sich aus der vom Aktor auf die Zahnstange aufgebrachten Kraft ergeben von der die Reibkräfte und etwaige Trägheitskräfte subtrahiert werden. Durch Bilden der geschilderten Differenz des Soll- und Ist-Aktormoments wird also eine zuverlässige und aufwandsarme Möglichkeit bereitgestellt, um bisher nur schwer zu berücksichtigende Reibungskräfte, insbesondere im Kontext einer geschilderten Kräftebilanz oder eines Kräftegleichgewichts, berücksichtigen zu können.

Insbesondere kann in diesem Zusammenhang vorgesehen sein, dass die Differenz aus Soll- und Ist-Aktormoment als Eingangsgröße eines Kalman-Filters (oder anderen Filtern oder Schätzern) verwendet wird, mittels dem die Zahnstangenkraftgröße ermittelt wird und/oder eine solche Eingangsgröße auf Basis der Differenz bestimmt wird. Insbesondere kann die Differenz (gegebenenfalls nach Umrechnung in eine Reibkraft) von einem aktorisch aufgebrachten Kraftanteil abgezogen werden. Die resultierende Größe kann die Eingangsgröße bilden. Prinzipiell kann diese Subtraktion auch erst im Kalman-Filter erfolgen, was ggf. aber aufwendiger ist.

Prinzipiell ist das Verwenden eines Kalman-Filters zum Bestimmen der Zahnstangenkraft bekannt. Durch Ermitteln der hierin geschilderten Differenz aus Soll- und Ist-Aktormoment wird eine geeignete Eingangsgröße eines entsprechenden Kalman-Filters aufwandsarm erhalten, wobei diese Eingangsgröße insbesondere eine wirksame Reibungskraft repräsentieren oder berücksichtigen kann.

Alternativ kann vorgesehen sein, die Differenz aus Soll- und Ist-Aktormoment von einer ermittelten Zahnstangenkraft (z.B. ermittelt per Kalman-Filter) abzuziehen. Anders ausgedrückt kann eine insbesondere mittels herkömmlicher Modelle, Filter oder Berechnungsansätzen ermittelte (vorläufige) Zahnstangenkraft nachträglich mittels des Differenzwerts korrigiert werden und kann dadurch ein Reibungseinfluss kompensiert werden. Von der vorläufigen Zahnstangenkraft kann der Differenzwert subtrahiert werden, um eine finale Zahnstangenkraftgröße zu erhalten

Wie erwähnt, kann die Lenkvorgabe mittels einer Momentenregelung umgesetzt werden. Insbesondere kann in diesem Fall das Soll-Aktormoment eine Eingangsgröße (insbesondere Soll-Größe) der Momentenregelung bilden. Die Momentenregelung kann einen Folgeregelkreis einer Kaskadenregelung bilden. Ein übergeordneter Regelkreis kann das Soll-Aktormoment als Eingangsgröße der Momentenregelung ausgeben oder bereitstellen.

Zusätzlich oder alternativ kann eine Positionsregelung zum Umsetzen der Lenkvorgabe erfolgen. In diesem Fall wird bevorzugt als Soll-Positionsgröße eine Soll-Position aus einer vom Fahrer vorgegebenen Lenkvorgabe ermitteln, beispielsweise durch Umrechnen eines vorgegebenen Lenkwinkels (und/oder an der Lenkhandhabe eingestellten Lenkhandhabewinkels) in eine einzustellende Positionsgröße der Zahnstange. Bei Einnahme der entsprechenden Position durch die Zahnstange kann ein an den Rädern wirksamer bzw. eingestellter Lenkwinkel dem vom Fahrer gewünschten und per Lenkhandhabe vorgegebenen Winkel entsprechen. Eine Ist-Größe der Zahnstangenposition kann z.B. aus einem Aktorwinkelsignal (und insbesondere Rotorwinkelsignal) des auf die Zahnstange einwirkenden Aktors bestimmt werden, insbesondere in Kenntnis eines Übersetzungsverhältnisses zwischen dem Aktor und der Zahnstange.

Allgemein können die betrachteten Positionsgrößen Winkelpositionen sein. Es kann sich aber auch z.B. um eine Position der Zahnstange entlang deren Verlagerungsachse und/oder einen Winkel der Räder oder Lenkhandhabe handeln. Diese Größen können aber bei bekannten mechanischen Eigenschaften des Lenksystems eindeutig einander entsprechen und/oder ineinander umrechenbar sein. Auch ein Winkelwert kann daher eine Positionsgröße im Sinne dieser Offenbarung sein oder zumindest einer solchen entsprechen.

Die Positionsregelung kann einen Führungsregler einer Kaskadenregelung bilden, die auch die geschilderte Momentenregelung umfassen kann. Insbesondere kann die Positionsregelung eine Ausgangsgröße bereitstellen und/oder einregeln, die die Eingangsgröße wenigstens eines Folgereglers ist, insbesondere einer Momentenregelung der hierin geschilderten Art oder einer der Momentenregelung noch übergeordneten weiteren Folgeregelung (z.B. einer Drehzahlregelung).

In diesem Zusammenhang kann vorgesehen sein, dass die Zahnstangenkraftgröße auch auf Basis einer Soll-Positionsgröße und Ist-Positionsgröße der Positionsregelung ermittelt wird. Diese Größen können mit geringem sensorischem und/oder modellbasiertem Aufwand ermittelt werden. Vorteilhaft ist dies dahingehend, dass durch die Soll- und Ist-Positionsgröße eine weitere Möglichkeit bereitgestellt wird, um Reibungsverhältnisse innerhalb des Lenksystems ermitteln und/oder berücksichtigen zu können. Dadurch kann die Zahnstangenkraftgröße noch präziser bestimmt werden.

Insbesondere kann eine Differenz der Soll-Positionsgröße und Ist-Positionsgröße bestimmt werden. Beispielsweise kann anhand dieser Differenz eine Kraftgröße bestimmt werden (im Folgenden auch Reibungskraftgröße) und die Zahnstangenkraftgröße kann auch auf Basis dieser Kraftgröße ermittelt werden. Diese Kraftgröße kann einen weiteren Reibkraftanteil repräsentieren. Dem liegt der Gedanke zugrunde, dass eine insbesondere trotz aktorisch erzeugtem Moment verbleibende Differenz aus Soll- und Ist-Positionsgröße zumindest anteilig auch auf Reibungseinflüsse zurückzuführen ist und/oder mit Reibungseinflüssen innerhalb des Lenksystems zumindest mittelbar korreliert. Anders ausgedrückt kann also die Differenz aus Soll- und Ist-Positionsgröße eine Größe sein, die eine Reibungskraft im Lenksystem repräsentiert und die aufwandsarm zu ermitteln ist.

Insbesondere kann in diesem Zusammenhang vorgesehen sein, dass die Kraftgröße (Reibungskraftgröße) basierend auf einem vorab hinterlegten Zusammenhang zwischen der Differenz von Soll- und Ist-Positionsgröße und Werten dieser Kraftgröße ermittelt wird. Der Zusammenhang kann z.B. in Form einer Tabelle oder einer Kennlinie hinterlegt sein. Er kann experimentell, per Simulation und insbesondere während Versuchsfahrten ermittelt werden. Während diesen Versuchsfahrten können z.B. mittels hierin geschilderten Ansätzen ermittelte Zahnstangenkräfte lediglich für Versuchszwecke sensorisch erfassten Zahnstangenkräften gegenübergestellt werden. Eine verbleibende Differenz zwischen gemessener und berechneter Zahnstangenkraft kann auf noch nicht berücksichtigte Reibungskräfte innerhalb des Lenksystems zurückzuführen sein. Es hat sich herausgestellt, dass die Differenz aus Soll- und Ist-Positionsgröße mit diesen verbleibenden Abweichungen korreliert, sodass die entsprechende Differenz verwendet werden kann, um die anderweitig nicht berücksichtigten Reibungseinflüsse abbilden zu können.

Vorzugsweise kann also vorgesehen sein, Reibungseinflüsse sowohl auf Basis einer Soll-Ist-Differenz der Positionsgröße als auch der Aktormomente zu ermitteln. Diese Reibungseinflüsse können jeweils und z.B. kumuliert im Rahmen des hierin geschilderten Kräftegleichgewichts oder einer Kräftebilanz und/oder von einem Kalman-Filter zum Ermitteln der Zahnstangenkraftgröße berücksichtigt werden, insbesondere durch Abziehen der Reibungseinflüssen von einer per Kalman-Filter ermittelten Zanhstangenkraft.

Die Erfindung betrifft auch ein Steuergerät für ein Kraftfahrzeug, das dazu eingerichtet ist, ein Verfahren gemäß jeglichem hierin geschilderten Aspekt auszuführen.

Das Steuergerät kann wenigstens eine Prozessoreinrichtung und/oder wenigstens eine Speichereinrichtung umfassen. Auf der Speichereinrichtung können Programmanweisungen hinterlegt sein, die bei Ausführen durch die Prozessoreinrichtung das Steuergerät dazu veranlassen, Maßnahmen und/oder Verfahrensschritte jeglicher hierin geschilderten Art auszuführen. Insbesondere kann das Steuergerät an einen Fahrzeug-Kommunikationsbus angeschlossen sein. Hierüber kann es mit jeglichen hierin geschilderten sensorischen Einheiten kommunizieren. Insbesondere kann es hierüber sämtliche Soll- und/oder Ist-Größen erhalten und/oder ermittelte Größen oder Steuersignale ausgeben. Beispielsweise kann das Steuergerät hierin erwähnte Regelungen und/oder Regler softwarebasiert bereitstellen und/oder ausführen. Insbesondere kann es dazu eingerichtet sein, entsprechende Regelungsprogramme auszuführen, um ein Aktormoment und/oder eine Positionsgröße in der hierin geschilderten Weise einzuregeln.

Allgemein kann das Steuergerät wenigstens ein Steuersignal ausgeben, beispielsweise um den mit der Zahnstange gekoppelten Aktor anzusteuern und/oder einen Reaktionskraftaktor der hierin geschilderten Art. Im letzteren Fall kann die Steuergröße auf Basis der ermittelten Zahnstangenkraftgröße bestimmt werden.

Ausführungsbeispiele der Erfindung werden im Folgenden anhand der beigefügten schematischen Figuren erläutert.

Fig. 1    zeigt eine schematische Prinzipskizze eines Lenksystems mit einem Steuergerät gemäß einem Ausführungsbeispiel der Erfindung, wobei das Steuergerät ein Verfahren gemäß einem Ausführungsbeispiel der Erfindung ausführt.

Fig. 2    zeigt ein Ablaufschema eines erfindungsgemäßen Verfahrens, das mit dem Steuergerät aus Fig. 1 ausführbar ist.

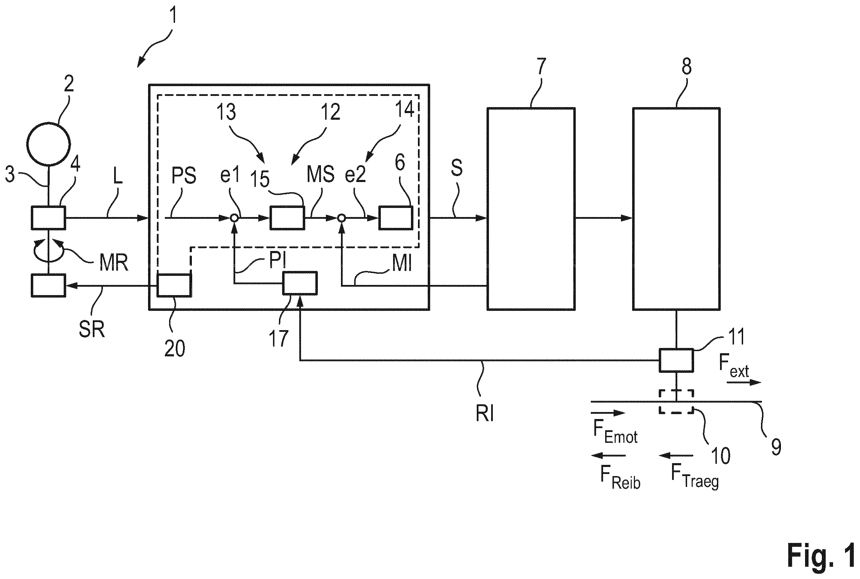

In Fig. 1 ist ein Steer-by-Wire-Lenksystem 1 eines nicht gesondert dargestellten Kraftfahrzeugs als schematische Prinzipskizze gezeigt. Das Lenksystem 1 umfasst eine Lenkhandhabe 2 in Form eines Lenkrads. Die Lenkhandhabe 2 ist mit einer Lenkwelle 3 verbunden. An der Lenkwelle 3 ist wenigstens ein Sensor 4 zum Erfassen einer Lenkvorgabe L angeordnet. Bei dem Sensor 4 kann es sich um einen Sensor 4 zum Erfassen einer aktuellen Winkellage und/oder Winkelposition der Lenkhandhabe 2 handeln. Die Winkelposition kann ebenfalls eine entsprechende Lenkvorgabe L darstellen.

Das Lenksystem 1 umfasst auch ein Steuergerät 6 gemäß einem Ausführungsbeispiel der Erfindung. Das Steuergerät 6 erhält die Lenkvorgabe L als eine Eingangsgröße. Als eine Ausgangsgröße gibt das Steuergerät 6 eine Stellgröße oder auch ein Stellsignal S an eine Leistungselektronik 7 eines Aktors 8 aus.

Bei dem Aktor 8 handelt es sich im gezeigten Beispiel um einen elektrischen Servomotor, der mit einer Zahnstange 9 des Lenksystems 1 über eine Getriebestufe 10 gekoppelt ist. Bei der Getriebestufe 10 kann es sich z.B. um ein Kugelumlauf- oder ein Ritzelgetriebe mit bevorzugt nur einem einzingen von dem Aktor 8 angetriebenen Ritzel handeln. Die Übersetzung der Getriebestufe 10 und der Ritzelradius sind prinzipiell bekannt.

Mit einer Ausgangswelle des Aktors 8 ist auch ein Rotorlagensensor 11 verbunden. Dieser kann ein Rotorwinkelsignal RI erfassen und beispielsweise an das Steuergerät 6 rückführen. Mittels eines optionalen Funktionsblocks 17 kann daraus z.B. ein Ist-Positionssignal der Zahnstange 9 bestimmt werden. Alternativ können als Positionsgrößen Winkelpositionen, Winkelgrößen und insbesondere Lenkwinkel betrachtet werden.

Das Steuergerät 6 umfasst eine symbolisch abgebildete Prozessoreinrichtung 20, die eine schematisch dargestellte Kaskadenregelung 12 ausführt. Im Rahmen dieser Kaskadenregelung 12 wird beispielhaft ein Positionsregelkreis 13 als Führungsregler verwendet und ein Motorregelkreis 14 als wenigstens ein Folgeregler. Dabei wird zunächst aus der Lenkvorgabe L eine Soll-Position PS (z.B. der Zahnstange 9) ermittelt und einem Positionsregler 15 zugeführt. Dieser gibt daraufhin beispielhaft ein Soll-Moment MS zum Umsetzen dieser Positionsvorgabe PS aus. Gleichzeitig erhält das Steuergerät 6 aber auch eine Ist-Momentengröße MI. Diese wird im gezeigten Beispiel aus Phasenströmen der Leistungselektronik 7 und insbesondere dort durchgeführter Regelungen (z.B. feldorientierte Regelung) bestimmt. Alternativ kann auch eine direkte sensorische Erfassung des Ist-Moments MI erfolgen. Die aus dem Soll-Moment MS und Ist-Moment MI gebildete Regeldifferenz e2 wird einem Momentenregler 16 zugeführt, der dann beispielhaft das Stellsignal S als eine Ausgangsgröße ausgibt.

Ferner gezeigt ist auch, dass die Ist-Rotorlage RI z.B. basierend auf dem bekannten Übersetzungsverhältnis der Getriebestufe 10 verwendet wird, um eine Ist-Position PI zu bestimmen. Diese wird zum Ermitteln einer Regeldifferenz e1 zur Soll-Position PS verwendet, wobei diese Regeldifferenz e1 als Eingangsgröße des Positionsreglers 15 dient.

Auf diese Weise kann mit der Kaskadenregelung 12 die Lenkvorgabe L durch aktorisches Auslenken der Zahnstange 9 eingeregelt werden. Dabei bildet das geschilderte Soll-Moment MS ein Soll-Aktormoment und das Ist-Moment MI ein Ist-Aktormoment der hierin beanspruchten Art. Ebenso bilden die Soll- und Ist-Position PS, PI Soll- und Ist-Positionsgrößen im Sinne der Ansprüche.

Das Steuergerät 6 ist in dem gezeigten Beispiel ferner dazu eingerichtet, einen mit der Lenkwelle 3 verbundenen Reaktionskraftaktor 22 anzusteuern. Hierfür erzeugt die Prozessoreinrichtung 20 des Steuergeräts 6 ein Reaktionskraft-Steuersignal SR. Dieses Steuersignal SR wird auf Basis einer Zahnstangenkraftgröße $F_{ext}$ ermittelt, welche das Steuergerät 6 und beispielhaft dessen Prozessoreinrichtung 20 anhand verschiedener Größen der Kaskadenregelung 12 bestimmt.

Zunächst wird anhand des Ist-Moments MI eine aktuell vom Aktor 8 auf die Zahnstange 9 aufgebrachte aktorische Verlagerungskraft $F_{Emot}$ bestimmt. In bekannter Weise wirken dieser gestrichelt angedeutete Reibungskräfte $F_{Reib}$ entgegen bzw. muss die Verlagerungskraft $F_{Emot}$ Reibungskräfte $F_{Reib}$ zum Erzielen einer Zahnstangenverlagerung überwinden. Ebenso können Trägheitskräfte $F_{Traeg}$ der Zahnstange 9 berücksichtigt werden, welche sich aus der konstruktiven Gestaltung der Zahnstange 9 ergeben.

Die tatsächlich an der Zahnstange 9 wirkende Zahnstangenkraft $F_{ext}$, die eine Zahnstangenkraftgröße im Sinne der Ansprüche bildet, kann durch Aufstellen des folgenden Kräftegleichgewichts ermittelt werden. Bevorzugt wird sie jedoch per Kalman-Filter ermittelt und dann nachträglich mittels eines erfindungsgemäß ermittelten Reibkraftanteils korrigiert.

Zunächst zurückkommend auf den modellbasierten Ansatz durch Lösen des Kräftegleichgewichts ergibt sich dieses Gleichgewicht wie folgt:

$$F_{ext} = F_{Emot} - F_{Traeg} - F_{Reib} \qquad (1.1)$$

Dabei ergibt sich die aktorische Kraft $F_{Emot}$ aus dem Ist-Moment MI, der Übersetzung $i_{Emot}$ der Getriebestufe 10 und deren Ritzelradius $r_{Ritzel}$ wie folgt:

$$F_{Emot} = \frac{MI * i_{Emot}}{r_{Ritzel}} \qquad (1.2)$$

Für die Trägheitskraft $F_{Traeg}$ gilt mit der Zahnstangenmasse $m_{Zst}$ und deren Beeschleunigung $a_{Zst}$ (wie z.B. aus der Aktordrehzahl bestimmbar):

$$F_{Traeg} = m_{Zst} * a_{Zst} \qquad (1.3)$$

Die Reibungskraftgröße $F_{Reib}$ ist zunächst unbekannt, wird aber durch die erfindungsgemäße Lösung aufwandsarm und zuverlässig geschätzt. Hierfür bildet die Prozessoreinrichtung 20 die Differenz aus dem Soll-Moment MS und Ist-Moment MI oder verwendet die entsprechende Regeldifferenz e2. Diese Regeldifferenz e2 kann in Kenntnis des Übersetzungsverhältnisses $I_{Emot}$ und Ritzelradius $r_{Ritzel}$ der Getriebestufe 10 in eine an der Zahnstange angreifende Reib-Kraftkomponente umgerechnet werden:

$$F_{Reib\Delta M} = \frac{(MS-MI)*i_{Emot}}{r_{Ritzel}} \tag{1.4}$$

Zusätzlich verwendet die Prozessoreinrichtung 20 bevorzugt auch die Regeldifferenz e1 und/oder ermittelt die Differenz aus der Soll- und Ist-Position PS, PI. Hieraus kann eine noch zusätzliche Reib-Kraftkomponente ermittelt werden, beispielsweise mittels einer vorab hinterlegten Tabelle oder Kennlinie, die einen Zusammenhang zwischen Werten dieser Differenz und Werten einer entsprechenden Kraftkomponente definiert. Vorliegend wird hierfür beispielhaft ein Umrechnungsfaktor k verwendet, der eine Konstante oder abhängig von der Positions- bzw. Regeldifferenz sein kann.

$$F_{Reib\Delta\varphi} = \frac{(PS-PI)*k*i_{Emot}}{r_{Ritzel}} \tag{1.5}$$

Die insgesamt wirksame Reibkraft $F_{Reib}$ ergibt sich als Summe der beiden vorstehenden Kraftkomponenten bzw. -anteile aus Gleichung 1.4 oder 1.5. Damit sind alle Kraftkomponenten auf der rechten Seite von (1.1) bekannt und die Prozessoreinrichtung 20 kann darauf basierend die Zahnstangekraft $F_{ext}$ unter Reibkraftberücksichtigung bestimmen.

Bevorzugt ermittelt die Prozessoreinrichtung 20 jedoch die Zahnstangenkraft $F_{ext}$ per bekanntem Kalman-Filter. Hierfür kann auf jegliche bekannte Ansätze des Standes der Technik zurückgegriffen werden. Von der vom Kalman-Filter zunächst ermittelten Zahnstangenkraft $F_{ext}$ wird dann die erfindungsgemäß ermittelte Reibkraft $F_{Reib}$ abgezogen, die z.B. anhand von (1.4) und bevorzugt auch (1.5) ermittelt wurde.

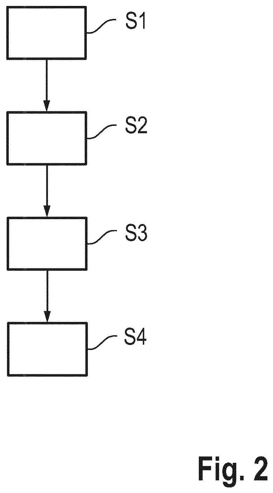

In Fig. 2 ist ein Ablaufschema eines Verfahrens gezeigt, wie es von dem Steuergerät 6 aus Fig. 1 ausgeführt wird. Die Zahnstangenkraft $F_{ext}$ wird hier per Kalman-Filter bestimmt.

In einem Schritt S1 werden, z.B. im Rahmen der Regelung mittels der Kaskadenregelung 12 das aktorische Soll- und Ist-Moment MS, MI erhalten. In einem Schritt S2 wird daraus die Regeldifferenz e2 gebildet. Diese wird verwendet, um in Kenntnis des Übersetzungsverhältnisses $i_{Emot}$ der Getriebestufe 10 die obige momentenabhängige Reib-Kraftkomponente zu ermitteln (sh. Gleichung 1.4). Bevorzugt wird im Schritt S3, der auch gleichzeitig zum Schritt S1 und/oder S2 ausgeführt werden kann, auch die zweite Regeldifferenz e1 bestimmt, die aus einer Abweichung der Soll- und Ist-Position PS, PI resultiert. Insbesondere kann mittels dieser Regeldifferenz e1 eine weitere Reib-Kraftkomponente bestimmt werden (sh. Gleichung 1.5). In einem Schritt S4 wird eine (vorläufige) Zahnstangenkraft $F_{ext}$ per Kalman-Filter bestimmt. Erneut kann dies gleichzeitig oder auch vorgelagert zu jeglichem der Schritte S1-S3 erfolgen. Von dieser (vorläufigen) Zahnstangenkraft $F_{ext}$ wird anschließend die insgesamt ermittelte Reibkraft $F_{Reib}$ abgezogen, um eine Reibkraft-kompensierte bzw. Reibkraft-korrigierte (finale) Zahnstangenkraft $F_{ext}$ zu erhalten.

**Bezugszeichenliste**

| | |
|---|---|
| 1 | Lenksystem |
| 2 | Lenkhandhabe |
| 3 | Lenkwelle |
| 4 | Sensor |
| 6 | Steuergerät |
| 7 | Leistungselektronik |
| 8 | Aktor |
| 9 | Zahnstange |
| 10 | Getriebestufe |
| 11 | Rotorlagensensor |
| 12 | Kaskadenregelung |
| 13 | Positionsregelkreis |
| 14 | Momentenregelkreis |
| 15 | Positionsregler |
| 16 | Momentenregler |
| 20 | Prozessoreinrichtung |
| 22 | Reaktionskraftaktor |
| L | Lenkvorgabe |

RI      Ist-Rotorlage
PI      Ist-Position
PS      Soll-Position
MI      Ist-Moment
MS      Soll-Moment
MR      Rückkopplungsmoment
E1      (Positions-)Regeldifferenz
E2      (Momenten-)Regeldifferenz
$F_{Emot}$    Verlagerungskraft
$F_{Reib}$    Reibkraft
$F_{ext}$    Zahnstangenkraftgröße
SR      Reaktionskraft-Steuersignal
S       Stellsignal

**Patentansprüche**

1. Verfahren zum Ermitteln einer Zahnstangenkraftgröße ($F_{ext}$) für ein Lenksystem (1) mit aktorisch verlagerbarer Zahnstange (9), aufweisend:

- Erhalten eines Soll-Aktormoments (MS) zum Umsetzen einer Lenkvorgabe (L);
- Erhalten eines Ist-Aktormoments (MI), das zum Umsetzten der Lenkvorgabe (L) aufgebracht wird;
- Ermitteln einer Zahnstangenkraftgröße ($F_{ext}$) auf Basis des Soll-Aktormoments (MS) und des Ist-Aktormoments (MI).

2. Verfahren nach Anspruch 1,
**gekennzeichnet durch**:

- aktorisches Erzeugen eines Rückkopplungmoments (MR) an einer Lenkhandhabe (2) auf Basis der Zahnstangenkraftgröße ($F_{ext}$).

3. Verfahren nach Anspruch 1 oder 2,
**dadurch gekennzeichnet, dass** die Zahnstangenkraftgröße ($F_{ext}$) anhand einer Differenz (e2) des Soll- Aktormoments (MS) und des Ist-Aktormoments (MI) ermittelt wird.

4. Verfahren Anspruch 2,
**dadurch gekennzeichnet, dass** die Differenz (e2) als eine Größe verwendet wird, die eine Reibungskraft (FR) zumindest anteilig repräsentiert.

5. Verfahren Anspruch 3 oder 4,
**gekennzeichnet durch** Subtrahieren der Differenz (e2) von einer per Kalman-Filter ermittelten vorläufigen Zahnstangenkraftgröße.

6. Verfahren nach einem der vorangehenden Ansprüche,
**dadurch gekennzeichnet, dass** die Lenkvorgabe (L) mittels einer Momentenregelung (14) umgesetzt wird und das Soll-Aktormoment (MS) eine Eingangsgröße der Momentenregelung (14) ist.

7. Verfahren nach einem der vorangehenden Ansprüche,
**dadurch gekennzeichnet, dass** eine Positionsregelung (13) zum Umsetzen der Lenkvorgabe (L) erfolgt.

8. Verfahren nach Anspruch 7,
**dadurch gekennzeichnet, dass** die Zahnstangenkraftgröße ($F_{ext}$) auch auf Basis einer Soll-Positionsgröße (PS) und Ist-Positionsgröße (PI) der Positionsregelung (13) ermittelt wird.

9. Verfahren nach Anspruch 8,

**dadurch gekennzeichnet, dass** anhand einer Differenz (e1) der Soll-Positionsgröße (PS) und Ist-Positionsgröße (PI) eine Reibungskraftgröße ($F_{Reib}$) zumindest anteilig bestimmt und die Zahnstangenkraftgröße ($F_{ext}$) auch auf Basis dieser Reibungskraftgröße ($F_{Reib}$) ermittelt wird,

insbesondere wobei die Reibungskraftgröße ($F_{Reib}$) basierend auf einem vorab hinterlegten Zusammenhang zwischen der Differenz der Soll-Positionsgröße (PS) und Ist-Positionsgröße (PS) und Werten der Reibungskraftgröße ($F_{Reib}$) ermittelt wird.

10. Steuergerät (6) für ein Kraftfahrzeug,
das dazu eingerichtet ist, ein Verfahren nach einem der vorangehenden Ansprüche auszuführen.

**Claims**

1. Method for determining a rack force variable ($F_{ext}$) for a steering system (1) having a rack (9) moved by actuator, the method comprising:

   - obtaining a target actuator torque (MS) for implementing a steering command (L);
   - obtaining an actual actuator torque (MI) that is applied in order to implement the steering command (L);
   - determining a rack force variable ($F_{ext}$) on the basis of the target actuator torque (MS) and the actual actuator torque (MI).

2. Method according to claim 1,
   **characterized by:**

   - generating, by actuator, a feedback torque (MR) at a steering handle (2) on the basis of the rack force variable ($F_{ext}$).

3. Method according to claim 1 or 2,
   **characterized in that** the rack force variable ($F_{ext}$) is determined using a difference (e2) between the target actuator torque (MS) and the actual actuator torque (MI).

4. Method according to claim 2,
   **characterized in that** the difference (e2) is used as a variable that at least partially represents a frictional force (FR).

5. Method according to claim 3 or 4,
   **characterized by** subtracting the difference (e2) from a preliminary rack force variable determined by Kalman filter.

6. Method according to any of the preceding claims,
   **characterized in that** the steering command (L) is implemented by means of torque control (14) and the target actuator torque (MS) is an input variable of the torque control (14).

7. Method according to any of the preceding claims,
   **characterized in that** position control (13) is performed in order to implement the steering command (L).

8. Method according to claim 7,
   **characterized in that** the rack force variable ($F_{ext}$) is also determined on the basis of a target position variable (PS) and actual position variable (PI) of the position control (13).

9. Method according to claim 8,

   **characterized in that** a frictional force variable ($F_{Reib}$) is at least partially ascertained using a difference (e1) between the target position variable (PS) and the actual position variable (PI), and the rack force variable ($F_{ext}$) is also determined on the basis of this frictional force variable ($F_{Reib}$),
   the frictional force variable ($F_{Reib}$) in particular being determined based on a prestored relationship between the difference between the target position variable (PS) and actual position variable (PS) and values of the frictional force variable ($F_{Reib}$).

10. Controller (6) for a motor vehicle,
    the controller being configured to carry out a method according to any of the preceding claims.

**Revendications**

1. Procédé pour la détermination d'une grandeur de force de crémaillère ($F_{ext}$) pour un système de direction (1) comportant une crémaillère (9) pouvant être déplacée par actionneur, présentant :

   - l'obtention d'un couple d'actionneur de consigne (MS) pour la réalisation d'une consigne de direction (L) ;
   - l'obtention d'un couple d'actionneur réel (MI) qui est appliqué pour la réalisation de la consigne de direction (L) ;
   - la détermination d'une grandeur de force de crémaillère ($F_{ext}$) sur la base du couple d'actionneur de consigne (MS) et du couple d'actionneur réel (MI).

2. Procédé selon la revendication 1,
   **caractérisé par :**

   - la génération par actionneur d'un couple de rétroaction (MR) sur une manette de direction (2) sur la base de la grandeur de force de crémaillère ($F_{ext}$).

3. Procédé selon la revendication 1 ou 2,
   **caractérisé en ce que** la grandeur de force de crémaillère ($F_{ext}$) est déterminée à partir d'une différence (e2) entre le couple d'actionneur de consigne (MS) et le couple d'actionneur réel (MI).

4. Procédé selon la revendication 2,
   **caractérisé en ce que** la différence (e2) est utilisée comme une grandeur représentant au moins en partie une force de frottement (FR).

5. Procédé selon la revendication 3 ou 4,
   **caractérisé par** la soustraction de la différence (e2) d'une grandeur de force de crémaillère préliminaire déterminée par un filtre de Kalman.

6. Procédé selon l'une des revendications précédentes,
   **caractérisé en ce que** la consigne de direction (L) est réalisée au moyen d'une régulation de couple (14) et le couple d'actionneur de consigne (MS) est une grandeur d'entrée de la régulation de couple (14).

7. Procédé selon l'une des revendications précédentes,
   **caractérisé en ce qu'**une régulation de position (13) est effectuée pour la réalisation de la consigne de direction (L).

8. Procédé selon la revendication 7,
   **caractérisé en ce que** la grandeur de force de crémaillère ($F_{ext}$) est également déterminée sur la base d'une grandeur de position de consigne (PS) et d'une grandeur de position réelle (PI) de la régulation de position (13).

9. Procédé selon la revendication 8,

   **caractérisé en ce que,** à l'aide d'une différence (e1) entre la grandeur de position de consigne (PS) et la grandeur de position réelle (PI), une grandeur de force de frottement ($F_{Reib}$) est définie au moins en partie et la grandeur de force de crémaillère ($F_{ext}$) est également déterminée sur la base de ladite grandeur de force de frottement ($F_{Reib}$), en particulier dans lequel la grandeur de force de frottement ($F_{Reib}$) est déterminée sur la base d'une relation prédéfinie entre la différence entre la grandeur de position de consigne (PS) et la grandeur de position réelle (PS) et des valeurs de la grandeur de force de frottement ($F_{Reib}$).

10. Appareil de commande (6) pour un véhicule automobile,
    lequel est configuré pour exécuter un procédé selon l'une des revendications précédentes.

Fig. 1

EP 4 222 043 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008021848 A1
- DE 102017222776 A1
- EP 3712036 A1
- DE 102018215555 A1